Europäisches Patentamt

(19) European Patent Office      (11) Publication number: **0 115 488**

Office européen des brevets      **B1**

(12) **EUROPEAN PATENT SPECIFICATION**

(45) Date of publication of the patent specification:
02.07.86

(51) Int. Cl.⁴: **F 16 L  37/12**

(21) Application number: **83900811.7**

(22) Date of filling: **01.03.83**

(86) International application number:
**PCT/SE 83/00066**

(87) International publication number:
**WO 83/03130 (15.09.83 Gazette 83/21)**

(54) **QUICK-COUPLING ASSEMBLY.**

(30) Priority: **02.03.82 SE 8201275**

(43) Date of publication of application:
**15.08.84 Bulletin 84/33**

(45) Publication of the grant of the patent:
**02.07.86 Bulletin 86/27**

(84) Designated Contracting States:
**AT CH DE FR GB LI NL**

(56) References cited:
**FR-A-1 408 620**
**SE-B-406 364**
**US-A-3 887 222**

(73) Proprietor: **OHLSSON, Weimar, Solrosvägen 3,
S-445 00 Surte (SE)**

(72) Inventor: **OHLSSON, Weimar, Solrosvägen 3, S-445
00 Surte (SE)**

(74) Representative: **Roth, Ernst Adolf Michael,
GÖTEBORGS PATENTBYRA AB Box 5005, S-402
21 Göteborg (SE)**

LIBER, STOCKHOLM 1986

## Description

The present invention refers to a quick coupling assembly for fluid conduits and of the kind comprising a first sleeve-shaped member, which at one end is provided with a number of resilient tongues provided with at least one projection intended to be locked behind at least one shoulder in a second sleeve-shaped member for being connected, thereto, a ring being axially displaceable in a second member towards and away from the shoulder and being designed to cooperate with the tongues for compressing these so that they can be moved past the shoulder.

## Background of the invention

Quick-coupling assemblies of the above mentioned kind are previously known through the Swedish patent publication No. 406 364. These couplings are especially adapted as hydraulic couplings for very high pressures and an advantage is that they can be connected and disengaged with a very simple manipulation without any tools. By the special design the couplings can be arranged in close groups, which means that the hydraulic blocks can be made considerably more compact than previously. A drawback with these couplings is however, especially if they are used for very high pressures, that they cannot freely rotate about its axle, i.e. the axle of the coupling, and therefore, in such cases where rotation can occur, the coupling must be provided with special rotation means. This however, complicates the construction and also provides a possible untightness at the same time as it raises the price of the coupling.

## Summary and advantages of the invention

The object of the present invention is to provide a quick coupling, which despite high pressures (e.g. 350 bar) is easily rotatable so that the pressure hose connected to the coupling freely can rotate, which is especially important at many hydraulic arrangements where relative movements can occur between different structural parts connected to each other by pressure hoses. This object has been solved by the fact that the shoulder is provided by a ring rotatably but axially undisplaceably arranged with respect to the second sleeve-shaped member.

## Description of embodiments

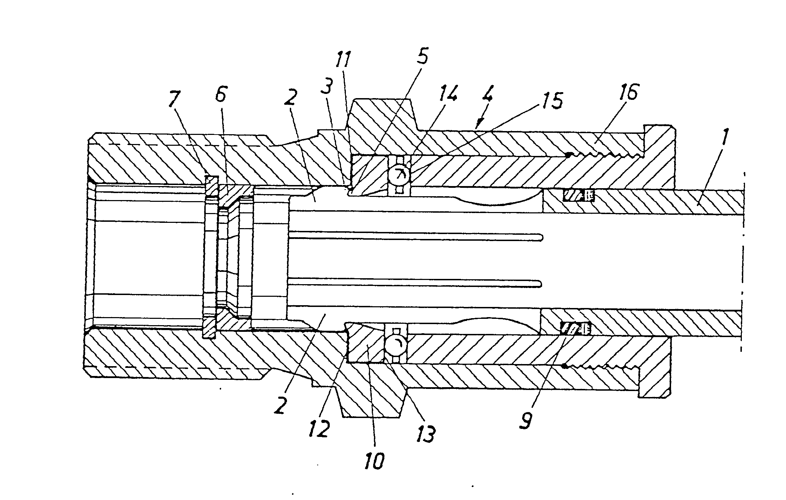

The invention will now be more closely described with reference to the accompanying drawing which shows a longitudinal section through a quick- coupling according to the invention with the coupling members coupled together.

The quick coupling assembly comprises a first sleeve-shaped member 1, for example intended to be connected to a hose (not shown) or the like. The first member 1 is at its free end slit open, so that for example four resilient tongues 2 are formed. Each tongue 2 has a peripheral, hook-shaped projection 3. A second sleeve-shaped member 4, which can be designed to be connected to a hydraulic component or the like is at its inside provided with a circumferential shoulder 5, behind which the projections 3 of the tongues 2 are intended to engage for connection of the first and second members 1 and 4 respectively.

The second member 4 is at some distance from the shoulder 5 provided with a withdrawal ring 6, which is axially displaceable between the shoulder 5 and a locking ring 7. The ring 6 is designed with a bevelled portion intended to cooperate with the tongues 2 for compressing these, so that they can be moved past the shoulder 5. The tongues are at their outside designed with a conicity decreasing from their projection 3 towards the free end, in order to admit cooperation with the shoulder 5 and the ring 6. The tongues 2 show less thickness of material than the non-slit part of the first member, which with its outer side partly is intended to make contact with the inside of the second member 4. A sealing 9 is provided within said portion, intended to make a sealing contact with the inside of the second member 4.

The shoulder 5 is provided by a ring 10, rotatably but axially undisplaceably arranged with respect to the sleeve 4 and which with its end 11 makes contact with a step 12 in the sleeve-shaped member 4. The radial end surface 13 of the ring 10 remote from the shoulder cooperates with a friction reducing member 14, which according to the embodiment shown comprises a thrust bearing. The thrust bearing makes contact with the end surface 15 of a barrel nut, which is screwed into the second member 4.

In the position shown where the members 1 and 4 are coupled together the members can thus rotate with respect to each other about the common axle of the coupling member.

## Claims

1. A quick-coupling assembly for fluid conduits and of the kind comprising a first sleeve-shaped member (1) which at one end is provided with a number of resilient tongues (2) provided with at least one projection (3) intended to be locked behind at least one shoulder (5) in a second sleeve-shaped member (4) for being connected, tevets a ring being axially displaceable in the second member towards and away from the shoulder and being designed to cooperate with the tongues for compressing these so that they can be moved past the shoulder,
characterized in
that the shoulder (5) is provided by a ring (10) which is rotatably but axially undisplaceably arranged with respect to the second sleeve-shaped member (4).

2. An assembly according to claim 1,
characterized in
that the radial end surface (13) of the ring (10) remote from the shoulder (5) is arranged to cooperate with a friction-reducing means (14) arranged to bear against a rest surface (15) in the second member (4).

3. An assembly according to claim 2,
characterized in
that the rest surface (15) consists of the end surface of a barrel nut (16) screwed into the second member.

4. An assembly according to claim 2,
characterized in
that the friction-reducing means (14) is a thrust bearing.

## Patentansprüche:

1. Schnellkupplung zur Verbindung von Rohrleitungen, mit einem ersten Rohrstück (1), das an einem Ende mit mehreren nachgiebigen Zungen (2) versehen ist, die mit wenigstens einem, an wenigstens einem Absatz (5) eines zweiten Rohrstückes (4) zur Verbindung mit demselben verriegelbaren Vorsprung (3) versehen sind, und mit einem im zweiten Rohrstück (4) bezüglich des Absatzes (5) axial verschiebbaren sowie zum Zusammenwirken mit den Zungen (2) ausgebildeten Ring, mit dem diese zusammengedrückt und an dem Absatz vorbeibewegt werden können, dadurch gekennzeichnet, daß der Absatz (5) von einem Ring (10) gebildet ist, der in dem zweiten Rohrstück (4) drehbar, jedoch axial unverschieblich gelagert ist.

2. Schnellkupplung nach Anspruch 1, dadurch gekennzeichnet, daß die dem Absatz (5) abgekehrte radiale Stirnfläche (13) des Ringes (10) zum Zusammenwirken mit einer Reibungsverminderungseinrichtung (14) ausgebildet ist, die an einer Stützfläche (15) im zweiten Rohrstück (4) anliegt.

3. Schnellkupplung nach Anspruch 2, dadurch gekennzeichnet, daß die Stützfläche (15) von der Stirnfläche einer in das zweite Rohrstück (4) eingeschraubten Spannmutter (16) gebildet ist.

4. Schnellkupplung nach Anspruch 2, dadurch gekennzeichnet, daß die Reibungsverminderungseinrichtung (14) ein Axialdrucklager ist.

## Revendications

1. Ensemble d'accouplement rapide pour conduites de fluid du type comprenant un premier élément en forme de manchon (1) dont l'une des extrémités est munie de pluieurs languettes élastiques (2) comportant au moins un prolongement (3) destiné à être verrouillé à l'arrière d'au moins un épaulement (5) dans un second élément en forme de manchon (4) pour être relié à celui-ci, une bague susceptible d'être déplacée axialement dans le second élément en se rapprochant et en s'éloignant de l'épaulement étant destinée à coopérer avec les languettes pour comprimer celles-ci, de telle sorte qu'elles puissent se déplacer au-delà de l'épaulement, caractérisé en ce que l'épaulement (5) est muni d'une bague (10) qui est montée à rotation mais fixée axialement par rapport audit second élément en forme de manchon (4).

2. Ensemble selon la revendication 1, caractérisé en ce que la surface d'extrémité radiale (13) de bague (10) éloignée de l'épaulement (5) est destinée à coopérer avec un moyen réducteur de la friction (14) destiné à prendre appui contre une surface de support (15) ménagée dans le second élément (4).

3. Ensemble selon la revendication 2, caractérisé en ce que, la surface de support (15) est constituée par la surface d'extrémité d'un écrou à barillet (16) vissé dans le sceond élément.

4. Ensemble selon la revendication 2, caractérisé en ce que, le moyen réducteur de la friction (14) est une butée à bille.